# EUROPÄISCHE PATENTSCHRIFT

(11) **EP 0 594 023 B1**
(45) Veröffentlichungstag und Bekanntmachung des Hinweises auf die Patenterteilung: **15.05.1996**
(21) Anmeldenummer: 93116425.5
(22) Anmeldetag: 11.10.1993
(51) Int. Cl.: B65G 67/60

(54) **Wendelförderer zum Be- und Entladen von Stückgut**
Helical conveyor for loading and unloading unit loads
Transporteur hélicoidal pour charger et décharger des charges isolées

(30) Priorität: 17.10.1992 DE 4235106
(43) Veröffentlichungstag der Anmeldung: 27.04.1994
(73) Patentinhaber: PWH Anlagen + Systeme GmbH, D-66386 St. Ingbert-Rohrbach (DE)
(72) Erfinder: Steckel, Horst, D-33386 St. Ingbert-Rohrbach (DE); Stenger, Erich, D-66583 Spiesen-Elversberg (DE)

(56) Entgegenhaltungen:
- DE-A- 3 019 985
- DE-C- 3 822 629

## Beschreibung

Die Erfindung betrifft einen Wendelförderer zum Be- und Entladen von Stückgut in und aus Laderäumen, insbesondere zum Be- und Entladen von Schiffen, bestehend aus einem im wesentlichen vertikal angeordneten Senkrechtförderer, der in seinem oberen Endbereich bei Bedarf mit einem Ausleger zusammenwirkt, wobei der Senkrechtförderer mit mehreren wendelförmig übereinander angeordneten Förderelementen versehen ist, die mittels mindestens eines umlaufenden, aus Rundgliedern bestehenden Kettenstranges antreibbar sind, der in vorgegebenen Abständen über entsprechende Bauteile mit Horizontal- und Vertikalrollen verbunden ist, die entsprechend der Wendelsteigung im Bereich ebenfalls wendelförmig vorgesehener Führungen abrollen.

Ein derartiger Wendelförderer ist der DE-C-38 22 629 zu entnehmen. Der hier angesprochene Wendelförderer ist zwar in der Lage, das Be- und Entladen von Stückgut zu bewerkstelligen, wobei sich hier jedoch, insbesondere in Abhängigkeit der Gewichte des durchzusetzenden Stückgutes im oberen Bereich des Wendelförderers, große Radialkräfte im Kettenstrang und in der Führungsbahn ergeben können.

Ziel des Erfindungsgegenstandes ist es, daß durch eine günstigere Gestaltung von Kettenstrang und Führung die Radialkräfte reduziert werden und ein von äußeren Einflüssen weitestgehend unabhängiger Be- und Entladevorgang realisiert werden kann, wobei der Wendelförderer einfach im Aufbau sein soll und evtl. Reparaturen schnell durchgeführt werden können.

Dieses Ziel wird erfindungsgemäß erreicht durch mindestens zwei im Fordertrum unterhalb der Förderelemente vorgesehene beabstandete Kettenstränge und mindestens zwei zwischen den Kettensträngen angeordnete Führungen für die Horizontal- und die Vertikalrollen, wobei die Kettenstränge über in vorgegebenen Abständen angeordnete, die Horizontal- und die Vertikalrollen aufnehmende Bauteile miteinander verbunden sind.

Vorteilhafte Weiterbildungen des Erfindungsgegenstandes sind den Unteransprüchen zu entnehmen.

Die bereits in der DE-C-38 22 629 beschriebenen Vorteile werden mit dem erfindungsgemäßen Wendelförderer noch übertroffen, insbesondere im Hinblick darauf, daß die Kräfte nunmehr in allen Richtungen optimal abgenommen werden können. Die infolge der Kettenzugkraft im oberen Bereich ansteigenden Radialkräfte können dadurch besser abgenommen werden, daß die schnallenartig ausgebildeten Elemente im oberen Bereich einen geringeren Abstand als im Restbereich des Senkrechtförderers aufweisen, um auf diese Art und Weise ein größeres Widerstandsmoment zu erhalten. Die konstruktive Ausgestaltung der Ketten wird hierbei so gewählt, daß beide die Wendellänge berücksichtigen, gleiche Kräfte erhalten und ebenfalls einem im wesentlichen gleichmäßigen Verschleiß unterliegen. Die Kettenräder weisen hierbei die gleiche Zähnezahl, jedoch infolge der unterschiedlichen Kettenteilung unterschiedliche Durchmesser auf. Durch Einsatz von Rundgliederketten können einzelne Glieder der jeweiligen Kettenstränge in den abgekröpften Bereichen der als Flachstähle ausgebildeten Bauteile in einfacher Weise aufgeschoben und bei Bedarf verriegelt werden. Eine Verriegelung kann sich unter Umständen jedoch erübrigen durch die aufgeschobene Tragschale, die als Kettensicherung gegen Herunterschieben am Außenradius dient.

Die Horizontal- und die Vertikalrollen sind vorzugsweise ebenfalls an den Flachstählen befestigt, so daß der Austausch sämtlicher Verschleißteile (Förderelemente, Ketten, Rollen) in einfacher Weise durchgeführt werden kann. Die Förderelemente sind nach Art von Tragschalen ausgebildet und mit einer rauhen Oberfläche zur Vermeidung des Rutschens des Stückgutes versehen. Die Vertiefungen in den Tragschalen dienen zum Einführen von Flachfedern, um das Stückgut in den Übergabebereichen problemlos weiterbewegen zu können. Somit kann ein Fördern in beiden Richtungen ermöglicht werden. Infolge der sich über die gesamte Förderhöhe des Senkrechtförderers einstellenden nach innen geneigten Anordnung der Förderelemente, wird die zwangsläufig auftretende Fliehkraft nach außen sicher beherrscht und auf diese Art und Weise ein Verrutschen des Stückgutes radial nach außen weitestgehend vermieden, wodurch auch die ebenfalls unerwünschte Reibung zwischen dem Stückgut und den Außenbereichen des Senkrechtförderers reduziert, wenn nicht gar vollständig vermieden wird.

Die Erfindung ist anhand eines Ausführungsbeispieles in der Zeichnung dargestellt und wird wie folgt beschrieben. Es zeigen:
- Figur 1 -: senkrechter Schnitt durch einen Wendelförderer
- Figur 2 -: Teilansicht der Führung der Kettenstränge
- Figur 3 -: Draufsicht auf einen Teilbereich der Wendel

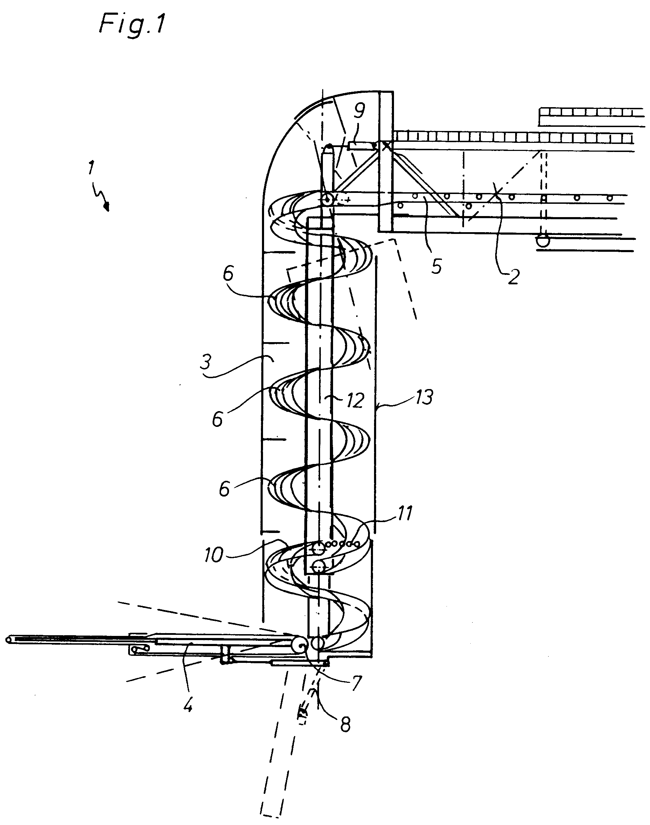

Figur 1 zeigt einen Wendelförderer 1, der aus folgenden Komponenten zusammengesetzt ist:
einen im wesentlichen horizontal sich erstreckenden Ausleger 2, einen Senkrechtförderer 3 sowie einen Horizontalförderer 4. Der Ausleger 2 ist an einem nicht weiter dargestellten, ggf. verfahrbaren Portal befestigt und ist mit einem Förderband 5 versehen. Der Senkrechtförderer 3 besteht aus mehreren übereinander angeordneten Wendeln 6. Am unteren Ende des Senkrechtförderers 3 ist ein um eine horizontale Achse 7 schwenkbarer teleskopierbarer Horizontalförderer 4 angeordnet, der in Form eines Förderbandes ausgebildet ist. Die Schwenkbewegung des Horizontalförderers 4 erfolgt über einen am unteren Ende des Senkrechtförderers 3 gelagerten Hydraulikzylinder 8. Im oberen Bereich des Senkrechtförderers 3 erstreckt sich ein weiterer Hydraulikzylinder 9, der mit dem Ausleger 2 verbunden ist und der bei Auf- und Abwärtsbewegungen des Auslegers 2 ein absolut vertikales Verfahren des Senkrechtförderers 3 gewährleistet. Der Horizontalförderer 4 kann um 360° gegenüber dem Senkrechtförderer 3 verdreht werden, wobei er mittels eines nicht weiter dargestellten Hubzylinders schraubenförmig in die erste Wendel 6 des Senkrechtförderers 3 hineingedreht wird. Der Übergabebereich zwischen dem drehenden Teil 10 und dem feststehenden Teil 6 des Senkrechtförderers 3 wird durch eine Übergabezunge 11 gebildet. Die Wendeln 6 winden sich zwischen einer inneren Zentralsäule 12 sowie einem äußeren Gehäuseteil 13, der ggf. mit einer Außenverkleidung versehen werden kann.

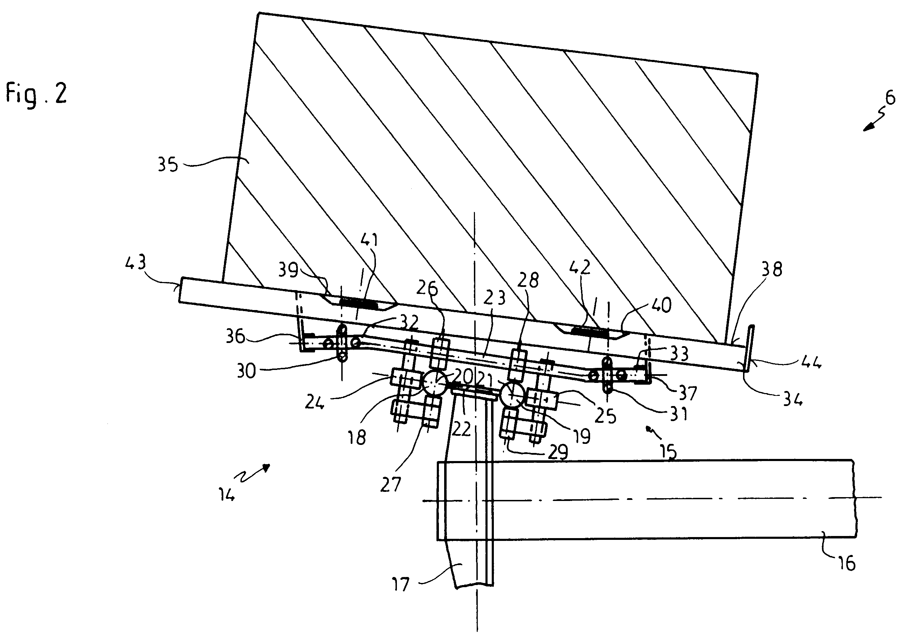

Figur 2 zeigt einen Teilbereich einer Wendel 6, insbesondere den Bereich der Kettenstränge 14 und 15. Die Kettenstränge 14,15 sind als Rundgliederketten ausgebildet. An der hier nicht weiter dargestellten Zentralsäule (Figur 1) greifen etwa horizontal sich erstreckende Kragarme 16 an, die in ihren Endbereichen mit etwa vertikal sich erstreckenden Stützen 17 ausgerüstet sind. Im Bereich der Stützenenden sind die als Führungen ausgebildeten Rundstähle 18,19 vorgesehen, deren Achsen 20,21, räumlich gesehen, geneigt zueinander verlaufen. Die Rundstähle 18,19 sind über eine Vielzahl schnallenartig ausgebildeter Elemente 22 miteinander verbunden, wobei die Elemente 22 wiederum an den Stützen 17 gehalten sind. Oberhalb der Rundstähle 18,19 ist ein die Kettenstränge 14,15 miteinander verbindendes, als Flachstahl ausgebildetes Bauteil 23 vorgesehen, das mit Horizontalrollen 24,25 sowie Vertikalrollen 26,27 bzw. 28,29 versehen ist, wobei die Rollen 24,25 jeweils seitlich außerhalb der Rundstähle 18,19 und die Rollen 26-29 ober- und/oder unterhalb der Rundstähle 18 und 19 vorgesehen sind. Einzelne Glieder 30,31 der Kettenstränge 14,15 werden auf die abgekröpften Bereiche 32,33 der Flachstähle 23 aufgeschoben. Das als Tragschale ausgebildete eigentliche Förderelement 34 zum Transport des Stückgutes 35 weist Ansätze 36,37 auf, die auf die freien Enden der abgekröpften Bereiche 32 bzw. 33 aufgeschoben und bei Bedarf dort gesichert werden. Die Oberfläche 38 der Tragschalen 34 ist mit einem rauhen Belag versehen, um ein Rutschen des Stückgutes 35 weitestgehend zu unterbinden. In die Oberfläche 38 sind Vertiefungen 39,40 eingebracht, in die in den Übergabebereichen (z.B. Figur 1, Position 11) hier nur angedeutete Flachfedern 41,42 eingreifen, die den Übergabevorgang erleichtern. Infolge der räumlich geneigten Anordnung der Achsen 20,21 der Rundstähle 18,19 weisen auch die zugehörigen Förderelemente 34 eine entsprechende Neigung auf, dergestalt, daß die äußeren Kanten 43 höher stehen als die innere Kante 44. Durch die rauhe Oberfläche 38 sowie die vogesehene Neigung wirkt sich die radial nach außen gerichtete Fliehkraft nicht mehr so extrem aus und das Stückgut 35 verbleibt im Laufe des vertikalen Transportvorganges weitestgehend stationär auf den Förderelementen 34.

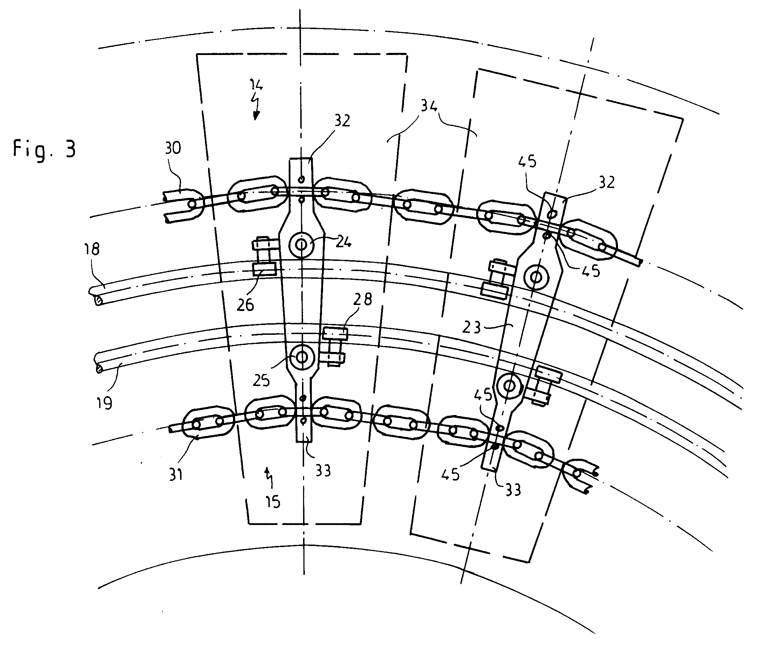

Figur 3 zeigt in der Draufsicht einen Teilbereich einer Wendel 6, wobei folgende Bauteile erkennbar sind:
die Förderelemente 34, ein Flachstahl 23 mit den abgekröpften Bereich 32 und 33, die Kettenstränge 14 und 15 mit den Kettengliedern 30 und 31, die auf die abgekröpften Bereich 32 und 33 des Flachstahles 23 aufgesteckt sind. Hier angedeutet sind noch Sicherungsstifte 45 zur Fixierung der Kettenglieder 30 bzw. 31. Ferner erkennbar sind die als Führungen ausgebildeten Rundstähle 18 und 19 sowie die Horizontalrollen 24 und 25 sowie Vertikalrollen 26 und 28.

## Patentansprüche

1. Wendelförderer zum Be- und Entladen von Stückgut in und aus Laderäumen, insbesondere zum Be- und Entladen von Schiffen, bestehend aus einem im wesentlichen vertikal angeordneten Senkrechtförderer (3), der in seinem oberen Endbereich bei Bedarf mit einem Ausleger (2) zusammenwirkt, wobei der Senkrechtförderer (3) mit mehreren wendelförmig übereinander angeordneten Förderelementen (34) versehen ist, die mittels mindestens eines umlaufenden, aus Rundgliedern (30,31) bestehenden Kettenstranges (14,15) antreibbar sind, der in vorgegebenen Abständen über entsprechende Bauteile mit Horizontal- (24,25) und Vertikalrollen (26,27,28,29) verbunden ist, die entsprechend der Wendelsteigung im Bereich ebenfalls wendelförmig vorgesehener Führungen (18,19) abrollen, gekennzeichnet durch mindestens zwei im Fördertrum unterhalb der Förderelemente (34) vorgesehene, beabstandete Kettenstränge (14,15) und mindestens zwei zwischen den Kettensträngen (14,15) angeordnete Führungen (18,19) für die Horizontal-(24,25) und die Vertikalrollen (26-29), wobei die Kettenstränge (14,15) über in vorgegebenen Abständen angeordnete, die Horizontal-(24,25) und die Vertikalrollen (26-29) aufnehmende Bauteile (23) miteinander verbunden sind.

2. Wendelförderer nach Anspruch 1, dadurch gekennzeichnet, daß die Bauteile (23) aus in ihren Endbereichen abgekröpften Flachstählen gebildet sind.

3. Wendelförderer nach den Ansprüchen 1 und 2, dadurch gekennzeichnet, daß die abgekröpften Bereiche (32,33) zum Aufstecken und ggf. Sichern (38) einzelner Kettenglieder (30,31) der Kettenstränge (14,15) vorgesehen sind.

4. Wendelförderer nach den Ansprüchen 1 bis 3, dadurch gekennzeichnet, daß die Förderelemente (34) mit in Richtung der Flachstähle (23) weisenden Ansätzen (36,37) versehen sind, die auf die Endbereiche der Flachstähle (23) aufschiebbar und ggf. dort arretierbar sind.

5. Wendelförderer nach den Ansprüchen 1 bis 4, dadurch gekennzeichnet, daß die Kettenteilung des inneren (15) gegenüber der des äußeren Kettenstranges (14) unterschiedlich ist.

6. Wendelförderer nach den Ansprüchen 1 bis 5, dadurch gekennzeichnet, daß der äußere Kettenstrang (14) eine größere Kettenteilung aufweist als der innere Kettenstrang (15).

7. Wendelförderer nach den Ansprüchen 1 bis 6, dadurch gekennzeichnet, daß die Förderelemente (34) förderseitig Vertiefungen (39,40) aufweisen, in die in dem bzw. den Übergabebereichen Federelemente (41,42) eingreifen.

8. Wendelförderer nach den Ansprüchen 1 bis 7, dadurch gekennzeichnet, daß die Führungen (18,19) aus Rundstählen gebildet sind.

9. Wendelförderer nach den Ansprüchen 1 bis 8, dadurch gekennzeichnet, daß die Rundstähle (18,19) über eine Vielzahl schnallenartig ausgebildeter Elemente (22) miteinander verbunden sind, die ihrerseits an Kragarmen (16) des Senkrechtförderers (3) abgestützt sind.

10. Wendelförderer nach den Ansprüchen 1 bis 9, dadurch gekennzeichnet, daß der Abstand der schnallenartigen Elemente (22) im oberen Bereich des Senkrechtförderers (3) geringer ist als in seinem Restbereich.

11. Wendelförderer nach den Ansprüche 1 bis 10, dadurch gekennzeichnet, daß die Achsen (20,21) der Rundstähle (18,19) im Fördertrum räumlich gesehen dergestalt geneigt zueinander verlaufen, daß die Außenkanten (43) der Förderelemente (34) ein höheres Niveau als die Innenkanten (44) aufweisen.

12. Wendelförderer nach den Ansprüchen 1 bis 11, dadurch gekennzeichnet, daß die Horizontalrollen (24,25) jeweils seitlich von außen und die Vertikalrollen (26-29) ober- und/oder unterhalb der Rundstähle (18,19) abrollen.

## Claims

1. Helical conveyor for loading and unloading unit loads into and out of loading areas, in particular for loading and unloading ships, comprising an essentially vertically arranged perpendicular conveyor (3), which cooperates in its upper end region with a boom (2), where required, said perpendicular conveyor (3) being provided with several transport elements (34) arranged helically one above the other, which may be driven by means of at least one circulating chain strand (14, 15) composed of round links (30, 31) and connected at predetermined distances via corresponding structural parts to horizontal (24, 25) and vertical rolls (26, 27, 28, 29), which roll in keeping with the gradient of the spiral in the region of guides (18, 19) also provided in helical form, characterised by at least two spaced chain strands (14, 15) provided in the winding compartment underneath the transport elements (34) and at least two guides (18, 19) arranged between the chain strands (14, 15) for the horizontal (24, 25) and vertical rolls (26-29), said chain strands (14, 15) being connected to one another via structural parts (23) spaced at predetermined distances to receive the horizontal (24, 25) and vertical rolls (26-29).

2. Helical conveyor according to Claim 1, characterised in that the structural parts (23) are formed from flat steel members bent at right angles in their end regions.

3. Helical conveyor according to Claims 1 and 2, characterised in that the regions (32, 33) bent at right angles are provided for attaching and optionally securing (38) individual chain links (30, 31) of the chain strands (14, 15).

4. Helical conveyor according to Claims 1 to 3, characterised in that the transport elements (34) are equipped with projections (36, 37), which point in the direction of the flat steel members (23) and may be pushed onto the end regions of the flat steel members (23) and optionally blocked there.

5. Helical conveyor according to Claims 1 to 4, characterised in that the chain pitch of the inner chain strand (15) differs in relation to that of the outer chain strand (14).

6. Helical conveyor according to Claims 1 to 5, characterised in that the outer chain strand (14) has a larger chain pitch than the inner chain strand (15).

7. Helical conveyor according to Claims 1 to 6, characterised in that the transport elements (34) have depressions (39, 40) on the transport side into which spring elements (41, 42) engage in the transfer region or regions.

8. Helical conveyor according to Claims 1 to 7, characterised in that the guides (18, 19) are formed from round steel members.

9. Helical conveyor according to Claims 1 to 8, characterised in that the round steel members (18, 19) are connected to one another via a plurality of clasp-like elements (22) which are themselves supported on on jibs (16) of the perpendicular conveyor (3).

10. Helical conveyor according to Claims 1 to 9, characterised in that the distance between the clasp-like elements (22) in the upper region of the perpendicular conveyor (3) is less than in its remaining area.

11. Helical conveyor according to Claims 1 to 10, characterised in that the axes (20, 21) of the round steel members (18, 19) run on an incline relative to one another, as viewed spatially, in the winding compartment in such a way that the outer edges (43) of the transport elements (34) are at a higher level than the inside edges (44).

12. Helical conveyor according to Claims 1 to 11, characterised in that the horizontal rolls (24, 25) each roll laterally from the outside and the vertical rolls (26-29) roll above and/or below the round steel members (18, 19).

## Revendications

1. Transporteur hélicoïdal pour charger et décharger des charges isolées dans les cales à marchandises, en particulier pour le chargement et le déchargement de navires, se composant d'un élévateur (3) agencé pour ainsi dire à la verticale et coopérant au besoin avec un bras (2), dans sa zone terminale supérieure, l'élévateur (3) étant équipé de plusieurs éléments de transport (34) hélicoïdaux superposés, susceptibles d'être entraînés par au moins un tronçon de chaînes (14, 15) circulant, se composant de maillons ronds (30, 31), qui est raccordé, à des intervalles prédéterminés, par l'intermédiaire d'éléments constitutifs correspondants, à des galets horizontaux (24, 25) et verticaux (26, 27, 28, 29), qui roulent, en suivant la rampe hélicoïdale, au contact de guides (18, 19) également conçus sous forme hélicoïdale, caractérisé par au moins deux tronçons de chaîne (14, 15) prévus et maintenus à distance dans la gaine de transport, sous les éléments de transport (34), et par au moins deux guides (18, 19) disposés entre les tronçons de chaîne (14, 15), pour les galets horizontaux (24, 25) et les galets verticaux (26-29), les tronçons de chaîne (14, 15) étant reliés entre eux par l'intermédiaire d'éléments constitutifs (23) montés à des intervalles prédéterminés, qui reçoivent les galets horizontaux (24, 25) et les galets verticaux (26-29).

2. Transporteur hélicoïdal selon la revendication 1, caractérisé en ce que les éléments constitutifs (23) sont matérialisés par des plats coudés dans leur zones d'extrémité.

3. Transporteur hélicoïdal selon les revendications 1 et 2, caractérisé en ce que les zones coudées (32, 33) sont prévues pour l'engagement et éventuellement le verrouillage (38) de maillons individuels (30, 31) des tronçons de chaîne (14, 15).

4. Transporteur hélicoïdal selon les revendications 1 à 3, caractérisé en ce que les éléments de transport (34) présentent des appendices (36, 37) pointés dans la direction des plats (23) et pouvant être engagés et éventuellement verrouillés sur les zones d'extrémité des plats (23).

5. Transporteur hélicoïdal selon les revendications 1 à 4, caractérisé en ce que le pas de chaîne du tronçon de chaîne intérieur (15) est différent de celui du tronçon de chaîne extérieur (14).

6. Transporteur hélicoïdal selon les revendications 1 à 5, caractérisé en ce que le tronçon de chaîne extérieur (14) présente un pas de chaîne plus grand que le tronçon de chaîne intérieur (15).

7. Transporteur hélicoïdal selon les revendications 1 à 6, caractérisé en ce que les éléments de transport (34) présentent, sur leur face portante, des enfoncements (39, 40) dans lesquels s'engagent des ressorts (41, 42) prévus dans la ou les zones de transfert.

8. Transporteur hélicoïdal selon les revendications 1 à 7, caractérisé en ce que les guides (18, 19) sont constitués par des ronds d'acier.

9. Transporteur hélicoïdal selon les revendications 1 à 8, caractérisé en ce que les ronds (18, 19) sont reliés par une pluralité d'éléments (22) en forme de boucles, qui sont en appui, quant à eux, sur les bras en porte-à-faux (16) de l'élévateur (3).

10. Transporteur hélicoïdal selon les revendications 1 à 9, caractérisé en ce que l'écartement des éléments en forme de boucles (22) est plus petit dans la zone supérieure de l'élévateur (3) que dans ses autres zones.

11. Transporteur hélicoïdal selon les revendications 1 à 11, caractérisé en ce que dans la gaine de transport, les axes (20, 21) des ronds d'acier (18, 19), observés dans l'espace, ont une inclinaison telle les uns par rapport aux autres, que les bords extérieurs (43) des éléments de transport (34) sont plus élevés que les bords intérieurs (44).

12. Transporteur hélicoïdal selon les revendications 1 à 11, caractérisé en ce que les galets horizontaux (24, 25) roulent latéralement, par l'extérieur, sur les ronds d'acier (18, 19), et les galets verticaux (26-29) roulent au-dessus et/ou en-dessous de ces ronds d'acier.
